# EUROPEAN PATENT APPLICATION

(11) **EP 4 700 761 A1**
(43) Date of publication of application: **25.02.2026**
(21) Application number: 24880053.4
(22) Date of filing: 14.10.2024
(51) Int. Cl.: G09G 5/377, G09G 5/373, G02F 1/1335, G02F 1/137, H04N 23/57

(54) **DISPLAY DEVICE FOR PROVIDING MIRROR IMAGE AND CONTENT THROUGH MIRROR DISPLAY AND CONTROL METHOD THEREOF**

(30) Priority: 16.10.2023 KR 20230137931
(71) Applicant: Samsung Electronics Co., Ltd., Suwon-si, Gyeonggi-do 16677 (KR)
(72) Inventor: KIM, Dongyoon, Suwon-si Gyeonggi-do 16677 (KR); LEE, Kisung, Suwon-si Gyeonggi-do 16677 (KR); JANG, Yongseok, Suwon-si Gyeonggi-do 16677 (KR)
(74) Representative: Appleyard Lees IP LLP
(86) International application number: PCT/KR2024/015494
(87) International publication number: WO 2025/084716

(57) **Abstract**

A display device may including: a mirror display including a plurality of blocks; a camera; and at least one processor configured to control at least one of a reflectance and display of the plurality of blocks, where the at least one processor is configured to: control first blocks among the plurality of blocks to display a content, control second blocks among the plurality of blocks to have a first reflectance providing at least a part of a mirror image on a front side of the mirror display, identify a second part of the mirror image corresponding to the first blocks based on an image captured by the camera, control the first blocks to display the second part of the mirror image and the content by overlapping the content with the second part of the mirror image.

## Description

### [Technical Field]

The disclosure relates to a display device and a control method thereof, and more particularly, to a display device that provides a mirror image and a content through a mirror display, and a control method thereof.

### [Background Art]

Spurred by the development of electronic technologies, various types of electronic devices are being developed and distributed. In particular, recently, various types of electronic devices including TVs are used in general homes. These electronic devices have been gradually equipped with various functions according to users' requests.

As an example, various types of services may be provided through a mirror display that may provide both a mirror function and a display function. For example, a mirror display may reflect a user, and at the same time, display a virtual object with which the user can interact.

However, in the case of a conventional mirror display, there was a problem that a blank was generated between an area wherein a content was displayed and an area wherein a user was reflected and a mirror image corresponding to the user was provided.

For example, if a plurality of blocks constituting a mirror display were controlled in block units, a blank was generated between the boundary of a content and a mirror image, and this led to a problem that the user felt a sense of disparity.

### [Disclosure]

### [Technical Solution]

Aspects will be set forth in part in the description which follows and, in part, will be apparent from the description, or may be learned by practice of the presented embodiments.

According to an aspect of the disclosure, a display device may include: a mirror display including a plurality of blocks; a camera; and at least one processor configured to control at least one of a reflectance and display of the plurality of blocks, wherein the at least one processor is configured to: control first blocks among the plurality of blocks to display a content, control second blocks among the plurality of blocks to have a first reflectance providing at least a part of a mirror image on a front side of the mirror display, identify a second part of the mirror image corresponding to the first blocks based on an image captured by the camera, control the first blocks to display the second part of the mirror image and the content by overlapping the content with the second part of the mirror image.

The at least one processor may be further configured to: control at least one third block, among the first blocks, which include a boundary of the content to display the second part of the mirror image in an area excluding an area in which the at least one third block displays the content.

The at least one processor may be further configured to: control the at least one third block to have a second reflectance, and control the first blocks excluding the at least one third block to have a third reflectance, where the first blocks excluding the at least one third block do not include the boundary of the content.

The first reflectance may be a maximum reflectance, the third reflectance may be a minimum reflectance, and the second reflectance may be a reflectance between the maximum reflectance and the minimum reflectance.

The display device may further include: a sensor configured to sense an amount of external light, where the processor is configured to: based on the amount of sensed external light being less than a threshold value, increase the second reflectance based on the first reflectance, and based on the amount of sensed external light being greater than or equal to the threshold value, decrease the second reflectance based on the third reflectance.

The at least one processor may be further configured to: control at least one third block, among the first blocks, to combine the content displayed by the at least one third block and the second part of the mirror image.

The at least one processor may be further configured to: adjust a size of the content displayed on the first blocks such that a boundary of the content corresponds to boundaries among the plurality of blocks.

The at least one processor may be further configured to: provide a visual effect based on adjusting the size of the content during a predetermined frame such that the boundary of the content corresponds with a boundary between the at least one third block and a block adjacent to the at least one third block.

The at least one processor may be further configured to: control at least one third block, among the first blocks, to display a predetermined image in an area excluding an area in which the at least one third block displays the content.

The at least one processor may be further configured to: control a reflectance of the plurality of blocks in block units, where the plurality of blocks have a same size.

According to an aspect of the disclosure, a control method of a display device including a mirror display including a plurality of blocks, the method may include: controlling first blocks among the plurality of blocks to display a content; controlling second blocks among the plurality of blocks to have a first reflectance providing at least a part of a mirror image on a front side of the mirror display; and identifying a second part of the mirror image corresponding to the first blocks based on an image captured by a camera, where controlling the first blocks includes: controlling the first blocks to display the second part of the mirror image and the content by overlapping the content to the second part of the mirror image.

The controlling the first blocks may include: controlling at least one third block, among the first blocks, which includes a boundary of the content to display the second part of the mirror image in an area excluding an area in which the at least one third block displays the content.

The control method may further include: controlling a reflectance of the plurality of blocks, where the controlling the reflectance includes: controlling the at least one third block among the first blocks to have a second reflectance; and controlling the first blocks excluding the at least one third block to have a third reflectance, and where the first blocks excluding the at least one third block do not include the boundary of the content.

The first reflectance may be a maximum reflectance, the third reflectance may be a minimum reflectance, and the second reflectance may be a reflectance between the maximum reflectance and the minimum reflectance.

The control method may further include: sensing an amount of external light, where the controlling the reflectance includes: based on the amount of sensed external light being less than a threshold value, increasing the second reflectance based on the first reflectance; and based on the amount of sensed external light being greater than or equal to the threshold value, decreasing the second reflectance based on the third reflectance.

According to an aspect of the disclosure, a display device may include: a mirror display including a plurality of blocks; a camera; and at least one processor configured to control at least one of a reflectance and display of the plurality of blocks, where the at least one processor is configured to: control first blocks among the plurality of blocks to display a content, control second blocks among the plurality of blocks to have a first reflectance providing at least a part of a mirror image on a front side of the mirror display, identify at least one third block among the first blocks corresponding to a boundary of the content, control a display of the at least one third block based on the content and a second part of the mirror image corresponding to the at least one third block.

The at least one processor may be further configured to: control the at least one third block to have a second reflectance, and control the first blocks to have a third reflectance, where the first reflectance is a maximum reflectance, the third reflectance is a minimum reflectance, and the second reflectance is a reflectance between the maximum reflectance and the minimum reflectance.

The at least one processor may be further configured to: control the at least one third block to display the second part of the mirror image in an area excluding an area in which the at least one third block displays the content.

### [Description of Drawings]

The above and other aspects, features, and advantages of certain embodiments of the present disclosure will be more apparent from the following description taken in conjunction with the accompanying drawings, in which:
FIG. 1 is a diagram illustrating characteristics of a mirror display according to an embodiment of the disclosure;
FIG. 2 is a block diagram illustrating a configuration of a display device according to an embodiment of the disclosure;
FIG. 3 and FIG. 4 are diagrams for illustrating operations of a switchable mirror according to an embodiment of the disclosure;
FIG. 5 is a diagram for illustrating a display device that provides a mirror image corresponding to an object and a content according to an embodiment of the disclosure;
FIG. 6 is a diagram for illustrating a display device that provides a mirror image and a content by using an image that captured an object according to an embodiment of the disclosure;
FIG. 7 is a diagram for illustrating first blocks that display a content according to an embodiment of the disclosure;
FIG. 8 is a diagram for illustrating first to third reflectances according to an embodiment of the disclosure;
FIG. 9 is a diagram for illustrating a display device that controls each of the first to third reflectances by sensing an external light amount according to an embodiment of the disclosure;
FIG. 10 is a diagram for illustrating a display device that controls each of the first to third reflectances by sensing an external light amount according to an embodiment of the disclosure;
FIG. 11 is a diagram for illustrating a display device that provides a visual effect according to an embodiment of the disclosure; and
FIG. 12 is a flow chart for illustrating a control method of a display device according to an embodiment of the disclosure.

### [Detailed Description of Exemplary Embodiments]

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms. It is to be understood that singular forms include plural referents unless the context clearly dictates otherwise. The terms including technical or scientific terms used in the disclosure may have the same meanings as generally understood by those skilled in the art.

As terms used in the embodiments of the disclosure, general terms that are currently used widely were selected as far as possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "comprise," "may comprise," "include," and "may include" denote the existence of such characteristics (e.g.: elements such as numbers, functions, operations, and components), and do not exclude the existence of additional characteristics.

As used herein, the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

Further, the expressions "first," "second," and the like used in the disclosure may be used to describe various elements regardless of any order and/or degree of importance. Also, such expressions are used only to distinguish one element from another element, and are not intended to limit the elements.

The description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Further, in the disclosure, "a module" or "a part" performs at least one function or operation, and may be implemented as hardware or software, or as a combination of hardware and software. In addition, a plurality of "modules" or "parts" may be integrated into at least one module and implemented as at least one processor, except "modules" or "parts" which need to be implemented as specific hardware.

Also, in this specification, the term "user" may refer to a person who uses an electronic device or a device using an electronic device (e.g.: an artificial intelligence electronic device).

Hereinafter, an embodiment of the disclosure will be described in more detail with reference to the accompanying drawings.

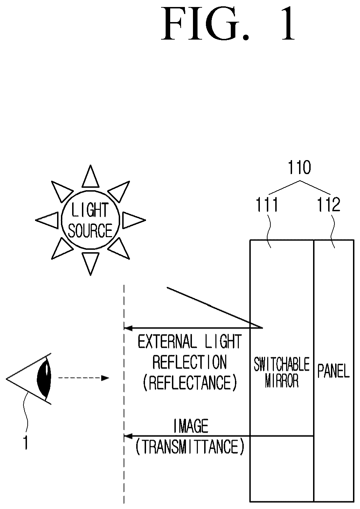

FIG. 1 is a diagram illustrating characteristics of a mirror display according to an embodiment of the disclosure.

A display device 100 according to an embodiment of the disclosure may be implemented as various types of mirror display devices that are installed in various spaces wherein a mirror is needed and can transmit information while providing a mirror function. Here, 'a mirror display' is a compound word of 'a mirror' that means a mirror and 'display' that means a work of visually expressing information.

As illustrated in FIG. 1, the display device 100 may include a mirror display 110, and the mirror display 110 may include a switchable mirror 111 and a display panel 112.

For example, the display device 100 may include a display panel 112 that displays an image, and a switchable mirror 111 that is arranged on the front surface of the display panel 112 and configured to adjust a reflectance.

According to an embodiment, the switchable mirror 111 may provide a mirror function by being implemented as a glass plate or a transparent plastic plate, on which a metal thin film or a dielectric multilayer is deposited to reflect a part of an incident light amount while other parts pass through is deposited.

According to an embodiment, the display panel 112 may include a display including self-luminous elements, or non-self-luminous elements and a backlight. For example, the display panel 112 may be implemented as various forms of displays such as a liquid crystal display (LCD), an organic light-emitting diodes (OLED) display, light-emitting diodes (LEDs), micro LEDs, mini LEDs, a plasma display panel (PDP), a quantum dot (QD) display, quantum dot light-emitting diodes (QLEDs), etc.

In the disclosure, for the convenience of explanation, the location of the user 1 will be defined as the front side of the display device 100 as illustrated in FIG. 1.

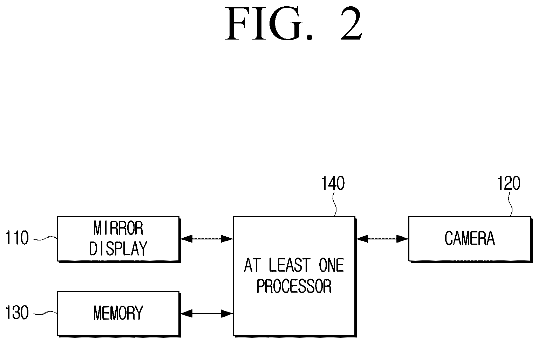

FIG. 2 is a block diagram illustrating a configuration of a display device according to an embodiment of the disclosure.

According to FIG. 2, the display device 100 may include a mirror display 110, a camera 120, a memory 130, and at least one processor 140.

The mirror display 110 may be implemented as a display including self-luminous elements, or a display including non-self-luminous elements and a backlight. For example, the mirror display 110 may be implemented as various forms of displays such as a liquid crystal display (LCD), an organic light-emitting diodes (OLED) display, light-emitting diodes (LEDs), micro LEDs, mini LEDs, a plasma display panel (PDP), a quantum dot (QD) display, quantum dot light-emitting diodes (QLEDs), etc.

Inside the mirror display 110, driving circuits that may be implemented in forms such as an a-si TFT, a low temperature poly silicon (LTPS) TFT, an organic TFT (OTFT), etc., and a backlight unit, etc. may also be included together. According to an embodiment, on the front surface of the mirror display 110, a touch sensor that has a form such as a touch film, a touch sheet, a touch pad, etc., and detects a touch operation is arranged, and may be implemented to detect various types of touch inputs. For example, the mirror display 110 may detect various types of touch inputs such as a touch input by a user's hand, a touch input by an input device such as a stylus pen, a touch input by a specific electrostatic material, etc. Here, an input device may be implemented as an input device of a pen type that can be referred to as various terms such as an electronic pen, a stylus pen, an S-pen, etc. According to an embodiment, the mirror display 110 may be implemented as a flat display, a curved display, a flexible display that can be folded and/or rolled, etc.

The mirror display 110 may be implemented as a display that provides a mirror function and a display function.

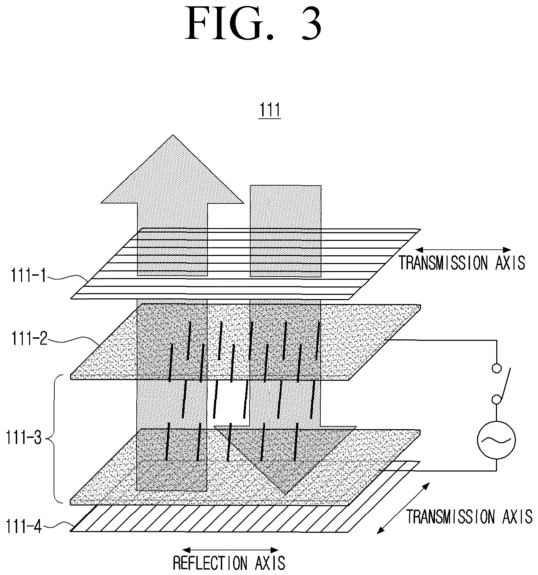

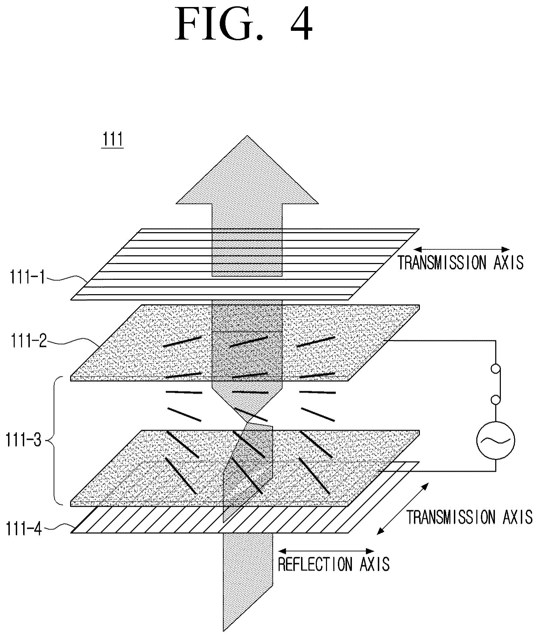

For example, the mirror display 110 may be implemented as a form wherein a half mirror (or a mirror film) has been added to a conventional general display panel. The display 210 illustrated in FIG. 3 and FIG. 4 illustrated an LCD including a half mirror which is an implementation example of the mirror display 110, and an LCD which is also called a liquid crystal display may operate based on the principle that, when a light is generated at the backlight, the light passes through the molecules of the liquid crystal, and a desired image may thereby be obtained.

FIG. 3 and FIG. 4 are diagrams for illustrating operations of a switchable mirror according to an embodiment of the disclosure.

A switchable mirror 111 according to an embodiment of the disclosure may be implemented in a form including a polarizer, an upper glass, a lower glass, and a reflective polarizer.

According to an embodiment, a liquid crystal (LC) layer may be formed between the upper glass and the lower glass. The liquid crystal (LC) may have a structure wherein rod-shaped molecules (liquid crystal molecules) are aligned in one direction similarly to solid crystals in an intermediate state of liquid and crystals.

According to an embodiment, the polarizer may be configured to make a polarized light pass through. Also, according to an embodiment, the upper glass and the lower glass may be implemented as a transparent conductive oxide (TCO) glass, but are not limited thereto.

FIG. 3 illustrates the switchable mirror 111 when the voltage is off, and when the voltage is off, the liquid crystal molecules may maintain a vertical state, and an incident polarized light may pass through the liquid crystal (LC) layer 111-3 as it is, and may be reflected to the reflection axis of the reflective polarizer 111-4. Accordingly, the switchable mirror 111 may be maintained in a mirror state.

For example, as an incident polarized light may be reflected to the reflection axis of the reflective polarizer when electricity is not applied, a mirror function (referred to as a mirror state hereinafter) of the switchable mirror 111 may be maintained. Also, as illustrated in FIG. 4, when electricity is applied, an incident polarized light may rotate by 90 degrees and pass through the reflection axis of the reflective polarizer 111-4, and thus a transparent state (referred to as a clear state hereinafter) of the switchable mirror 111 may be maintained.

The display device 100 may further include a protective film that is configured to protect the polarizer, a film that is configured to classify lights on the polarizer, etc.

Referring to FIG. 2, the camera 120 may obtain an image by capturing the surroundings of the display device 100 (at least one of the front surface, the rear surface, or the side surface).

According to an embodiment of the disclosure, the camera 120 may convert the captured image into an electric signal, and generate image data based on the converted signal. For example, the camera 120 may convert a subject into an electric image signal through a charge coupled device (CCD), amplify the converted image signal and convert it into a digital signal, and then perform signal processing. For example, the camera 120 may include at least one of a general (or, basic) camera, an RGB camera, or a super wide angle camera.

However, this is merely an example, and the camera 120 may be implemented as a time-of-flight (ToF) sensor, a LiDAR sensor, a radar sensor, an ultrasonic sensor, an infrared sensor, etc.

The camera 120 according to an embodiment may capture a still image on a specific time point, or capture still images consecutively (or, in real time).

For example, the camera 120 may capture the surroundings of the display device 100, and obtain an image including the surrounding environment of the display device 100 (e.g., the front surface of the mirror display 110).

As an example, the camera 120 may obtain an image corresponding to a mirror image that can be provided by the mirror display 110 according to the mirror function of the mirror display 110. For example, if an object or a user (referred to as an object hereinafter) is located on the front side of the mirror display 110, the display device 100 may provide a mirror image corresponding to the object through the mirror display 110, and obtain an image including the object with the object as a subject through the camera 120.

The memory 130 may store data according to one or more embodiments.

The memory 130 may be embedded in the display device 100, or may be attached to or detached from the display device 100 according to the usage of stored data. For example, in the case of data for driving the display device 100, the data may be stored in a memory embedded in the display device 100, and in the case of data for an extended function of the display device 100, the data may be stored in a memory that can be attached to or detached from the display device 100. In the case of a memory embedded in the display device 100, the memory may be implemented as at least one of a volatile memory (e.g.: a dynamic RAM (DRAM), a static RAM (SRAM), or a synchronous dynamic RAM (SDRAM), etc.) or a non-volatile memory (e.g.: an one time programmable ROM (OTPROM), a programmable ROM (PROM), an erasable and programmable ROM (EPROM), an electrically erasable and programmable ROM (EEPROM), a mask ROM, a flash ROM, a flash memory (e.g.: NAND flash or NOR flash, etc.), a hard drive, or a solid state drive (SSD)). Also, in the case of a memory that can be attached to or detached from the display device 100, the memory may be implemented in forms such as a memory card (e.g., compact flash (CF), secure digital (SD), micro secure digital (Micro-SD), mini secure digital (Mini-SD), extreme digital (xD), a multimedia card (MMC), etc.), and an external memory that can be connected to a USB port (e.g., a USB memory), etc.

According to an embodiment, the memory 130 may store a computer program including at least one instruction for controlling the display device 100.

According to an embodiment, the memory 130 may store a content received from an external device (e.g., a source device), an external storage medium (e.g., a USB), an external server (e.g., a webhard), etc. Alternatively, the memory 130 may store an image obtained through the camera 120 provided on the display device 100.

According to an embodiment, the memory 130 may store various kinds of information necessary for image quality processing, e.g., information for performing at least one of noise reduction, detail enhancement, tone mapping, contrast enhancement, color enhancement, or frame rate conversion, an algorithm, an image quality parameter, etc. Also, the memory 130 may store an intermediate image generated by image processing, and an image generated based depth information.

According to an embodiment, the memory 130 may be implemented as a single memory that stores data generated in various operations according to the disclosure. However, according to an embodiment, the memory 130 may also be implemented to include a plurality of memories that store different types of data respectively, or store data generated in different steps respectively.

Also, the memory 130 may store various types of data, programs, or applications for driving/controlling the display device 100. Other than them, the memory 130 may include a user sensing module, a communication control module, a voice recognition module, a motion recognition module, a light receiving module, a display control module, an audio control module, an external input control module, a power control module, a voice database (DB), or a motion data base (DB).

In the aforementioned embodiment, it was explained that various types of data is stored in an external memory of the at least one processor 140, but at least some of the aforementioned data can be stored in an internal memory of the at least one processor 140.

The at least one processor 140 may control the overall operations of the display device 100. The at least one processor 140 may be connected with each component of the display device 100, and control the overall operations of the display device 100.

The at least one processor 140 may perform the operations of the display device 100 according to the various embodiments by executing the at least one instruction stored in the memory 130.

The at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or a random combination of the other components of the display device 100, and perform an operation related to communication or data processing. Also, the at least one processor 140 may execute one or more programs or instructions stored in the memory. For example, the at least one processor 140 may perform the method according to one or more embodiments of the disclosure by executing the one or more instructions stored in the memory.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 140 may be implemented as a single core processor including one core, or it may be implemented as one or more multicore processors including a plurality of cores (e.g., multicores of the same kind or multicores of different kinds). In case the at least one processor 140 is implemented as multicore processors, each of the plurality of cores included in the multicore processors may include an internal memory of the processor such as a cache memory, an on-chip memory, etc., and a common cache shared by the plurality of cores may be included in the multicore processors. Also, each of the plurality of cores (or some of the plurality of cores) included in the multicore processors may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors, or they may be implemented by the plurality of cores. For example, when the first operation, the second operation, and the third operation are performed by the method according to one or more embodiments, all of the first operation, the second operation, and the third operation may be performed by a first core included in the multicore processors, or the first operation and the second operation may be performed by the first core included in the multicore processors, and the third operation may be performed by a second core included in the multicore processors.

In one or more embodiments of the disclosure, the processor may include a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

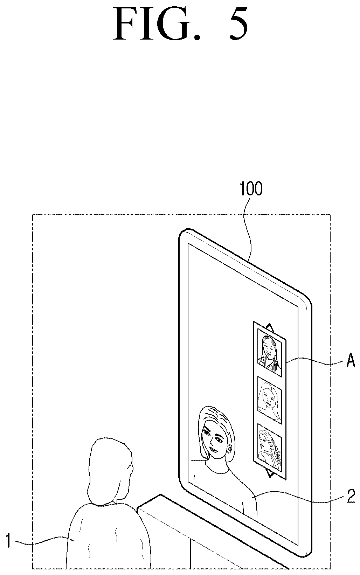

FIG. 5 is a diagram for illustrating a display device that provides a mirror image corresponding to an object and a content according to an embodiment of the disclosure.

The at least one processor 140 according to an embodiment of the disclosure may display a content A through a display function of the mirror display 110. Through the mirror function of the mirror display 110, the at least one processor 140 may provide a mirror image 2 corresponding to the object 1.

The mirror display 110 according to an embodiment of the disclosure may include a plurality of blocks. The at least one processor 140 according to an embodiment may control each of the plurality of blocks in block units. As an example, the mirror display 110 may include a plurality of blocks arranged in a matrix form (e.g., an n x m form).

As an example, each of the plurality of blocks may be implemented in the same size (or, the same resolution), or implemented in different sizes (or, different resolutions).

Hereinafter, for the convenience of explanation, an embodiment wherein each of the plurality of blocks is implemented in the same size (or, the same resolution), and the plurality of blocks are arranged in a matrix form and implement the mirror display 110 in a quadrangle form will be assumed, but is not limited thereto.

The at least one processor 140 according to an embodiment may provide the content A through first blocks among the plurality of blocks.

For example, the at least one processor 140 may display the content A by controlling first blocks among the plurality of blocks to perform the display function, and provide the mirror image 2 corresponding to the object 1 by controlling the second blocks among the plurality of blocks to perform the mirror function.

In the aforementioned embodiment, first blocks performing the display function according to control by the at least one processor 140 may simultaneously perform the mirror function.

For example, the at least one processor 140 may individually control a reflectance of each of the plurality of blocks, and if the reflectance of each of first blocks performing the display function exceeds 0%, first blocks may display the content A at the same time as providing the mirror image 2 of the object 1 located on the front side of the mirror display 110.

Referring to FIG. 5, the at least one processor 140 may display the content A through first blocks among the plurality of blocks, and provide the mirror image 2 through the second blocks among the plurality of blocks.

As an example, the at least one processor 140 may control the reflectance of each of first blocks displaying the content A to smaller than or equal to a threshold value (e.g., a reflectance of 0%) for increasing the visibility of the content A.

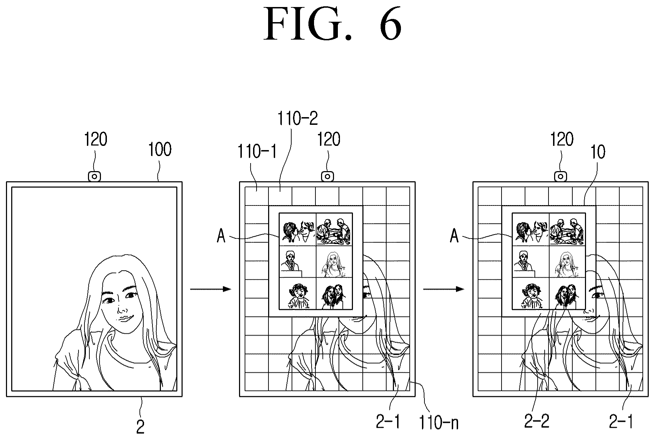

FIG. 6 is a diagram for illustrating a display device that provides a mirror image and a content by using an image that captured an object according to an embodiment of the disclosure.

Referring to FIG. 6, the at least one processor 140 may provide the content A through first blocks among the plurality of blocks 110-1, ..., 110-n, and provide a part 2-1 of the mirror image 2 corresponding to the object 1 located on the front side of the mirror display 110 by controlling the second blocks among the plurality of blocks 110-1, ..., 110-n in a first reflectance.

For example, the at least one processor 140 may control the reflectance of each of the second blocks that reflect the object 1 (or, do not display the content A) in the first reflectance (e.g., the maximum reflectance (100%)) for increasing the visibility of the mirror image 2.

According to an embodiment, the at least one processor 140 may control each of the plurality of blocks 110-1, ..., 110-n constituting the mirror display 110 in block units, and thus at least one third block including the boundary of the content A among first blocks displaying the content A may include an area that does not provide either the content A or the mirror image 2.

For example, at least one third block including the boundary of the content A among first blocks displaying the content A may include the remaining area excluding the area wherein the content A is displayed. According to an embodiment, the at least one processor 140 may control the reflectance of first blocks to less than or equal to the threshold value (e.g., the reflectance of 0%) for the visibility of the content A, and thus the remaining area of the at least one third block may be a blank space that does not provide either the content A or the mirror image 2.

According to an embodiment, there may a problem that the user of the display device 100 feels a sense of disparity due to a blank between the content A and a part 2-1 of the mirror image 2.

The at least one processor 140 according to an embodiment of the disclosure may obtain an image that captured the object 1 through the camera 120. The at least one processor 140 may identify the remaining part 2-2 of the mirror image 2 (e.g., second part of the mirror image) that can be provided through first blocks 10 displaying the content A (i.e., the remaining part excluding a part 2-1 of the mirror image 2 provided by the second blocks in the mirror image 2) based on the obtained image.

According to an embodiment, the at least one processor 140 may obtain the remaining part 2-2 of the mirror image 2 from the image, and display the remaining part 2-2 of the mirror image 2 and the content A through first blocks 10 by overlapping the content A with the remaining part 2-2 of the mirror image 2.

According to an embodiment, the at least one processor 140 may control first blocks 10 displaying the content A such that they do not display only the content A, but display the remaining part 2-2 of the mirror image 2 and the content A by overlapping the content A with the remaining part 2-2 of the mirror image 2. As noted above, the remaining part of the image may also be referred to as the "second part" of the mirror image.

As illustrated in FIG. 6, at least one third block including the boundary of the content A among first blocks 10 displaying the content A may display the remaining part 2-2 of the mirror image 2 in a part 2-1 of the mirror image 2, but not in a blank space that does not provide either the content A or the mirror image 2, and thus the problem that the user feels a sense of disparity can be resolved.

The boundary line among the plurality of blocks 110-1, ..., 110-n illustrated in FIG. 6 is a line that was illustrated randomly for the convenience of explanation, and depending on implementation examples, the plurality of blocks 110-1, ..., 110-n constitute the mirror display 110 by being connected, and thus the boundary line illustrated in FIG. 6 may not be identified by the user.

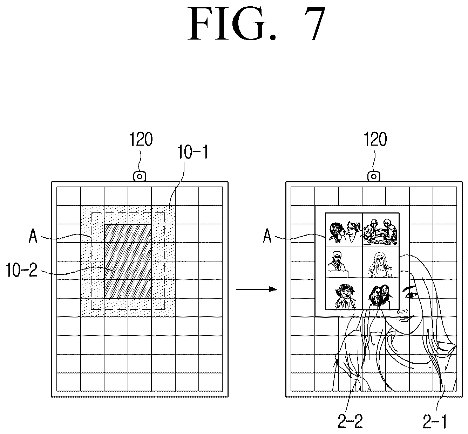

FIG. 7 is a diagram for illustrating first blocks that display a content according to an embodiment of the disclosure.

Referring to FIG. 7, the at least one processor 140 may display the content A through first blocks 10 among the plurality of blocks 110-1, ..., 110-n, and identify at least one third block 10-1 including the boundary of the content A (the dotted line in FIG. 7) among first blocks 10.

As illustrated in FIG. 7, the at least one third block 10-1 may include the remaining area excluding the area wherein the content A is displayed, and the remaining area excluding the area wherein the content A is displayed may be a blank space that does not provide either the content A or the mirror image 2.

According to an embodiment, as the at least one third block 10-1 may include the boundary of the content A, the at least one processor 140 may control the at least one third block 10-1 to display the remaining part 2-2 of the mirror image 2 in the remaining area excluding the area wherein the content A is displayed.

According to an embodiment, the remaining blocks 10-2 excluding the at least one third block 10-1 among first blocks 10 may not include the boundary of the content A, and all areas may display the content A without a blank.

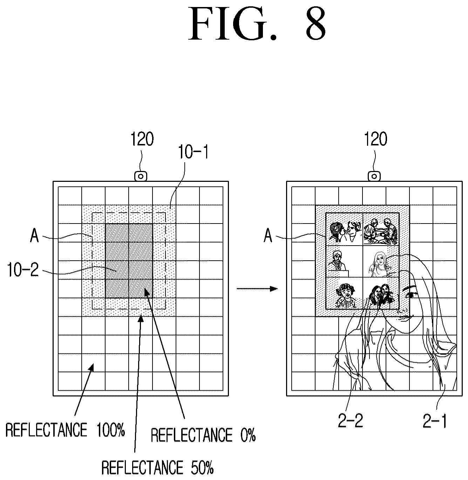

FIG. 8 is a diagram for illustrating first to third reflectances according to an embodiment of the disclosure.

According to an embodiment, the at least one processor 140 may control the reflectance of each of the plurality of blocks 110-1, ..., 110-n in block units.

Referring to FIG. 8, the at least one processor 140 may control the second blocks excluding first blocks 10 displaying the content A among the plurality of blocks 110-1, ..., 110-n in the first reflectance.

For example, the at least one processor 140 may control the second blocks excluding first blocks 10 displaying the content A in the maximum reflectance (e.g., 100%) for increasing the visibility of the mirror image 2 corresponding to the object 1.

The at least one processor 140 according to an embodiment may control the at least one third block 10-1 including the boundary of the content A (the dotted line in FIG. 8) among first blocks 10 displaying the content A in the second reflectance.

The at least one processor 140 according to an embodiment may control the remaining blocks 10-2 excluding the at least one third block 10-1 among first blocks 10 displaying the content A in the third reflectance.

According to an embodiment, the at least one processor 140 may control the remaining blocks 10-2 excluding the at least one third block 10-1 among first blocks 10 displaying the content A in a minimum reflectance (e.g., 0%) for increasing the visibility of the content A.

According to an embodiment, the at least one processor 140 may control the at least one third block 10-1 including the boundary of the content A (the dotted line in FIG. 8) among first blocks 10 displaying the content A in the third reflectance between the first reflectance and the second reflectance (e.g., between 0% and 100%).

According to an embodiment, the at least one processor 140 may identify the remaining part 2-2 of the mirror image 2 based on an image obtained through the camera 120, and display the remaining part 2-2 of the mirror image 2 through the at least one third block 10-1.

According to an embodiment, as the at least one third block 10-1 is controlled in the third reflectance between the first reflectance and the second reflectance, the at least one processor 140 may display the remaining part 2-2 of the mirror image 2 and the content A, and at the same time, provide the mirror image 2 by reflecting the object 1.

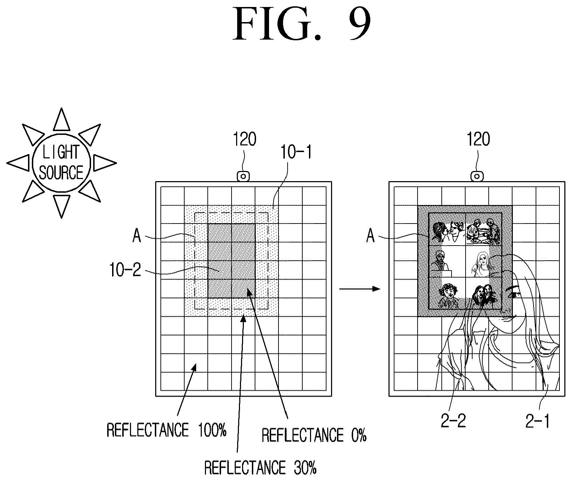

FIG. 9 is a diagram for illustrating a display device that controls each of the first to third reflectances by sensing an external light amount according to an embodiment of the disclosure.

The display device 100 according to an embodiment of the disclosure may further include a sensor that senses an external light.

According to an embodiment, the sensor may detect at least one of various characteristics such as the illumination, the strength, the color, the incident direction, the incident area, the distribution, etc. of a light. The sensor may be an illumination sensor, a temperature detection sensor, a light amount sensing layer, a camera, etc.

In particular, the sensor may be implemented as an illumination sensor that senses RGB lights, but is not limited thereto, and any device that can sense a light such as a white sensor, an IR sensor, an IR+RED sensor, an HRM sensor, a camera, etc. can be applied.

In this case, several types of photovoltaic cells may be used for the illumination sensor, but it is also possible to use a photovoltaic plate in measuring a very low illumination. For example, a CDS illumination sensor may be provided on the display device 100 and detect illuminations for two directions. In this case, the illumination sensor may be installed in at least one predetermined area on both surfaces of the display device 100, but it may also be installed in each pixel unit on both surfaces. For example, it may be possible to measure the illumination state for each area or each pixel by installing an illumination sensor in a form wherein a CMOS sensor has been enlarged to correspond to the size of the mirror display 110. For example, a CDS illumination sensor may detect a light around the display device 100, and an A/D converter may convert a voltage obtained through the CDS illumination sensor into a digital value, and transmit it to the at least one processor 140.

At least one sensor may be provided, and in case a plurality of sensors are provided, the sensors can be applied in different locations if the locations are locations in which illuminations in different directions can be measured. For example, the second sensor may be provided in a location based on sensing of illuminations in different directions of which angles are different from the first sensor by 90°or more.

As an example, the sensor may be arranged inside a glass provided on the mirror display 110, and in this case, the display device 100 may control the sensor such that the sensing function normally operates inside the glass through an algorithm compensating a transmittance/reflectance of the glass provided on the mirror display 110. The display device 100 may further include various sensors that are necessary for the operations of the display device 100 such as a touch sensor, an acceleration sensor, a geomagnetic sensor, a user detection sensor, etc.

The at least one processor 140 according to an embodiment of the disclosure may control the second reflectance of the at least one third block 10-1 including the boundary of the content A (the dotted line in FIG. 8) among first blocks 10 displaying the content A based on an external light amount sensed through the sensor.

For example, as illustrated in FIG. 9, in case the strength of a light reflected by the mirror display 110 is big as the illumination of an external light is high, the visibility of the content A becomes bad due to the reflective light. Also, if the illumination of the external light is high, the image quality of an image obtained through the camera 120 increases, and thus a sense of disparity between the remaining part 2-2 of the mirror image 2 displayed by the at least one third block 10-1 and a part 2-1 of the mirror image 2 provided by the second blocks excluding first blocks 10 among the plurality of blocks may decrease.

According to an embodiment, if an external light amount sensed through the sensor is greater than or equal to a threshold value, the at least one processor 140 may reduce the second reflectance of the at least one third block 10-1 including the boundary of the content A (the dotted line in FIG. 8) to be adjacent to the third reflectance (e.g., the minimum reflectance 0%).

For example, if an external light amount sensed through the sensor is greater than or equal to the threshold value, the at least one processor 140 may control the second reflectance of the at least one third block 10-1 including the boundary of the content A (the dotted line in FIG. 8) to 30%.

According to an embodiment, a sense of disparity between the remaining part 2-2 of the mirror image 2 displayed by the at least one third block 10-1 including the boundary of the content A (the dotted line in FIG. 8) and a part 2-1 of the mirror image 2 obtained from an image of a relatively good image quality is not big, and the second reflectance of the at least one third block 10-1 including the boundary of the content A (the dotted line in FIG. 8) decreases, and accordingly, the visibility of the content A can be increased.

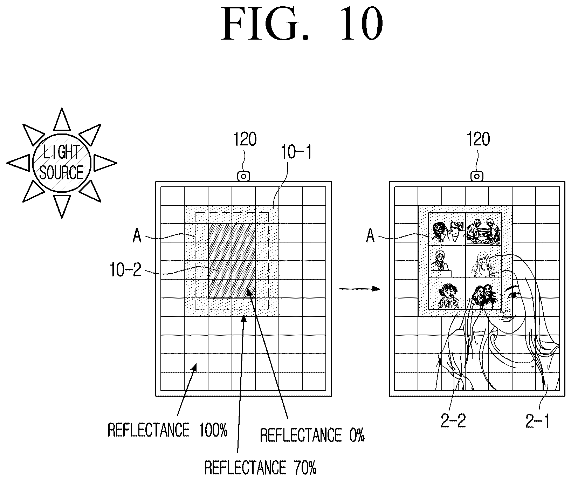

FIG. 10 is a diagram for illustrating a display device that controls each of the first to third reflectances by sensing an external light amount according to an embodiment of the disclosure.

As illustrated in FIG. 10, in case the strength of a light reflected by the mirror display 110 (the strength of a reflective light) is small as the illumination of an external light is low, the visibility of the content A displayed by first blocks 10 becomes greater. Also, if the illumination of the external light is low, the image quality of an image obtained through the camera 120 is reduced (as the image obtained through the camera 120 includes a noise), and thus a sense of disparity between the remaining part 2-2 of the mirror image 2 displayed by the at least one third block 10-1 and a part 2-1 of the mirror image 2 provided by the second blocks excluding first blocks 10 among the plurality of blocks may increase.

According to an embodiment, if an external light amount sensed through the sensor is less than the threshold value, the at least one processor 140 may increase the second reflectance of the at least one third block 10-1 including the boundary of the content A (the dotted line in FIG. 8) to be adjacent to the first reflectance (e.g., the maximum reflectance 100%).

For example, if an external light amount sensed through the sensor is less than the threshold value, the at least one processor 140 may control the second reflectance of the at least one third block 10-1 including the boundary of the content A (the dotted line in FIG. 8) to 70%.

According to an embodiment, the at least one processor 140 may reflect the object 1 through the at least one third block 10-1 by increasing the second reflectance of the at least one third block 10-1 including the boundary of the content A (the dotted line in FIG. 8), and may thereby provide the mirror image 2 and at the same time, provide the content A.

The specific numerical values of the first to third reflectances described above are merely an example for the convenience of explanation, and the numerical values may be changed diversely according to the manufacturer or the user's setting.

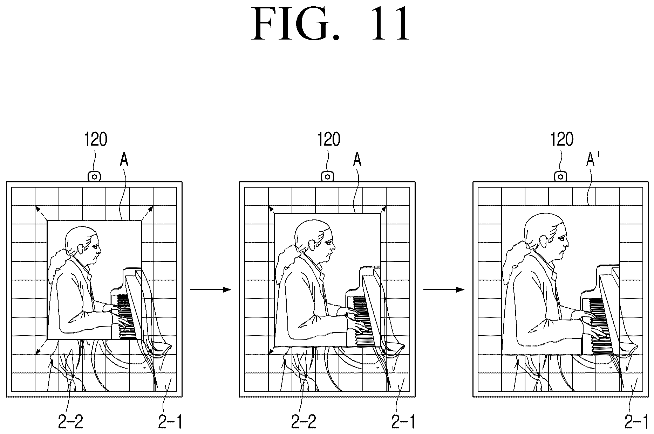

FIG. 11 is a diagram for illustrating a display device that provides a visual effect according to an embodiment of the disclosure.

The at least one processor 140 according to an embodiment of the disclosure may provide a visual effect of adjusting the size of the content A.

For example, as illustrated on the left side of FIG. 11, the at least one processor 140 may display the content A through first blocks 10 among the plurality of blocks 110-1, ..., 110-n. Also, the second blocks among the plurality of blocks 110-1, ..., 110-n may provide a part 2-1 of the mirror image 2 corresponding to the object 1.

According to an embodiment, the at least one third block 10-1 including the boundary of the content A among first blocks 10 may display the remaining part 2-2 of the mirror image 2.

As illustrated in the center of FIG. 11, the at least one processor 140 may adjust the size of the content A such that the boundary of the content A corresponds to the boundary among the plurality of blocks 110-1, ..., 110-n.

For example, as illustrated on the right side of FIG. 11, the at least one processor 140 may increase the size of the content A such that the boundary of the content A is located on the boundary between the at least one third block 10-1 and a block adjacent to the at least one third block 10-1.

The at least one processor 140 may provide a visual effect of gradually increasing the size of the content A such that the boundary of the content A included in the at least one third block 10-1 is located on the boundary between the at least one third block 10-1 and a block adjacent to the at least one third block 10-1 during a predetermined time (or, during a predetermined frame). According to an embodiment, the predetermined time, the number of the predetermined frames, etc. may be changed diversely according to the manufacturer, the user setting, etc.

However, this is merely an example, and the at least one processor 140 may automatically increase the content A such that the boundary of the content A is located on the boundary among the plurality of blocks 110-1, ..., 110-n, or increase the content A according to a user input (e.g., a spread input of increasing the size of the content A).

FIG. 11 illustrates increase of the content A for the convenience of explanation, but this is merely an example, and a visual effect of gradually decreasing the size of the content A inversely may be provided.

For example, the at least one processor 140 may provide a visual effect of gradually decreasing the size of the content A such that the boundary of the content A included in the at least one third block 10-1 is located on the boundary between the at least one third block 10-1 and the remaining blocks 10-2 excluding the at least one third block 10-1 among first blocks 10 during a predetermined time (or, during a predetermined frame). According to an embodiment, the at least one processor 140 may automatically decrease the content A such that the boundary of the content A is located on the boundary among the plurality of blocks 110-1, ..., 110-n, or decrease the content A according to a user input (e.g., a pinch input of decreasing the size of the content A).

Returning to FIG. 7, the at least one processor 140 according to an embodiment of the disclosure may blur (i.e., combine) at least one of the content A displayed by the at least one third block 10-1 or the remaining part 2-2 of the mirror image 2 and display it.

Also, the at least one processor 140 may control the at least one third block 10-1 to display a predetermined image in the remaining area excluding the area wherein the at least one third block 10-1 including the boundary of the content A among first blocks 10 displaying the content A displays the content A (i.e., a blank space wherein the at least one third block 10-1 does not provide either the content A or the mirror image 2). Here, the predetermined image may include a predetermined monochrome image, a predetermined pattern image, or an image stored in advance in the memory 130, etc.

Returning to FIG. 2, the at least one processor 140 according to an embodiment of the disclosure may obtain the remaining part 2-2 of the mirror image 2 that is continued from a part 2-1 of the mirror image 2 provided by the second blocks excluding first blocks 10 providing the content A among the plurality of blocks 110-1, ..., 110-n, and can be provided by first blocks 10 by inputting an image obtained through the camera 120 into a neural network model.

Here, the neural network model may be a model that was trained to identify a view point of the user for the mirror display 110 through the camera 120, and to convert an image obtained through the camera 120 to correspond to a mirror image reflected by the mirror display 110 according to the view point of the user.

Functions related to artificial intelligence according to the disclosure may be operated through the at least one processor 140 and the memory 130 of the display device 100.

The at least one processor 140 may include at least one of a central processing unit (CPU), a graphic processing unit (GPU), or a neural processing unit (NPU), but is not limited to the aforementioned examples of the processor.

A CPU is a generic-purpose processor that can perform not only general operations but also artificial intelligence operations, and it can effectively execute a complex program through a multilayer cache structure. A CPU may be implemented for a serial processing method that enables a systemic linking between the previous calculation result and the next calculation result through sequential calculations. A generic-purpose processor is not limited to the aforementioned examples excluding cases wherein it is specified as the aforementioned CPU.

A GPU is a processor for mass operations such as a floating point operation used for graphic processing, etc., and it can perform mass operations in parallel by massively integrating cores. In particular, a GPU may be implemented for a parallel processing method such as a convolution operation, etc. compared to a CPU. Also, a GPU may be used as a coprocessor for supplementing the function of a CPU. A processor for mass operations is not limited to the aforementioned examples excluding cases wherein it is specified as the aforementioned GPU.

An NPU is a processor specialized for an artificial intelligence operation using an artificial neural network, and it can implement each layer constituting an artificial neural network as hardware (e.g., silicon). Here, the NPU is designed to be specialized according to the required specification of a company, and thus it may have a lower degree of freedom compared to a CPU or a GPU, but it can effectively process an artificial intelligence operation required by the company. As a processor specialized for an artificial intelligence operation, an NPU may be implemented in various forms such as a tensor processing unit (TPU), an intelligence processing unit (IPU), a vision processing unit (VPU), etc. An artificial intelligence processor is not limited to the aforementioned examples excluding cases wherein it is specified as the aforementioned NPU.

Also, the at least one processor 140 may be implemented as a system on chip (SoC). Here, in the SoC, the memory, and a network interface such as a bus for data communication between the processor and the memory, etc. may be further included other than one or a plurality of processors.

In case a plurality of processors are included in the system on chip (SoC) included in the display device 100, the display device 100 may perform an operation related to artificial intelligence (e.g., an operation related to learning or inference of an artificial intelligence model) by using some processors among the plurality of processors. For example, the display device 100 may perform an operation related to artificial intelligence by using at least one of a GPU, an NPU, a VPU, a TPU, or a hardware accelerator specialized for artificial intelligence operations such as a convolution operation, a matrix product operation, etc. among the plurality of processors. However, this is merely an example, and the display device 100 may process an operation related to artificial intelligence by using a generic-purpose processor such as a CPU, etc.

Also, the display device 100 may perform operations related to artificial intelligence by using a multicore (e.g., a dual core, a quad core, etc.) included in one processor. In particular, the display device 100 may perform artificial intelligence operations such as a convolution operation, a matrix product operation, etc. in parallel by using the multicore included in the processor.

The one or plurality of processors perform control to process input data according to predefined operation rules or an artificial intelligence model stored in the memory 130. The predefined operation rules or the artificial intelligence model are characterized in that they are made through learning.

Here, being made through learning means that predefined operation rules or an artificial intelligence model having desired characteristics are made by applying a learning algorithm to a plurality of learning data. Such learning may be performed in a device itself wherein artificial intelligence is performed according to the disclosure, or through a separate server/system.

An artificial intelligence model may include a plurality of neural network layers. At least one layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN), generative adversarial networks (GAN), an NeRF, deep Q-networks, and a transformer, but the neural network in the disclosure is not limited to the aforementioned examples excluding specified cases.

A learning algorithm is a method of training a specific subject device (e.g., a robot) by using a plurality of learning data and thereby making the specific subject device make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

The display device 100 according to an embodiment of the disclosure may further include a communication interface. The communication interface may be implemented as various interfaces depending on implementation examples of the display device 100. For example, the communication interface may perform communication with an external device, an external storage medium (e.g., a USB memory), an external server (e.g., a webhard), etc. through communication methods such as Bluetooth, Wi-Fi based on AP (Wi-Fi, a wireless LAN network), Zigbee, a wired/wireless local area network (LAN), a wide area network (WAN), an Ethernet, IEEE 1394, a high-definition multimedia interface (HDMI), a universal serial bus (USB), a mobile high-definition link (MHL), the Audio Engineering Society/European Broadcasting Union (AES/EBU), Optical, Coaxial, etc. According to an embodiment, the communication interface may perform communication with another electronic device, an external server, and/or a remote control device, etc.

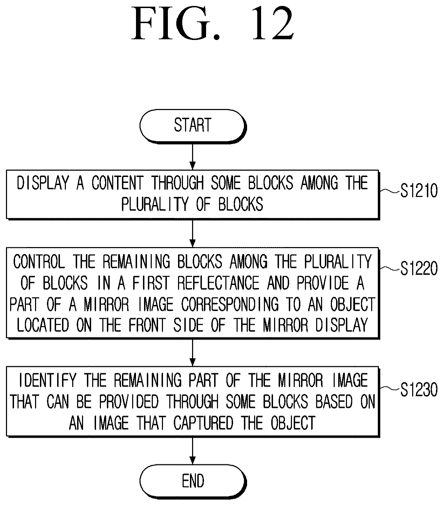

FIG. 12 is a flow chart for illustrating a control method of a display device according to an embodiment of the disclosure.

In a control method of a display device including a mirror display implemented in a plurality of blocks, a content is displayed through first blocks among the plurality of blocks in operation S1210.

The second blocks among the plurality of blocks are controlled in a first reflectance and a part of a mirror image corresponding to an object located on the front side of the mirror display is provided in operation S1220.

The remaining part (e.g., second part) of the mirror image that can be provided through first blocks is identified based on an image that captured the object in operation S1230.

In the operation S1210 of displaying the content, the remaining part of the mirror image and the content are displayed by overlapping the content to the remaining part of the mirror image.

According to an embodiment, the operation S1210 of displaying the content may include the step of controlling at least one third block including the boundary of the content among first blocks such that the at least one third block displays the remaining part of the mirror image in the remaining area excluding an area wherein the at least one third block displays the content.

The control method according to an embodiment may further include the step of controlling the reflectance of each of the plurality of blocks, and the step of controlling the reflectance may include the steps of controlling the at least one third block among first blocks in a second reflectance, and controlling the remaining blocks excluding the at least one third block among first blocks in a third reflectance, and the remaining blocks excluding the at least one third block among first blocks may not include the boundary of the content.

According to an embodiment of the disclosure, the first reflectance may be a maximum reflectance, the third reflectance may be a minimum reflectance, and the second reflectance may be a reflectance between the maximum reflectance and the minimum reflectance.

The control method according to an embodiment of the disclosure may further include the step of sensing an external light amount, and the step of controlling the reflectance may include the steps of, based on the sensed external light amount being less than a threshold value, increasing the second reflectance to be relatively adjacent to the first reflectance, and based on the sensed external light amount being greater than or equal to the threshold value, decreasing the second reflectance to be relatively adjacent to the third reflectance.

The operation S1210 of displaying the content according to an embodiment of the disclosure may include the step of blurring (e.g., combining) the content displayed by the at least one third block and the remaining part of the mirror image.

The control method according to an embodiment of the disclosure may further include the step of adjusting the size of the content such that the boundary of the content corresponds to the boundaries among the plurality of blocks.

The step of adjusting according to an embodiment of the disclosure may include the step of providing a visual effect of changing the size of the content during a predetermined frame such that the boundary of the content is located on the boundary between the at least one third block and a block adjacent to the at least one third block.

The operation S1210 of displaying the content according to an embodiment of the disclosure may include the step of controlling the at least one third block to display a predetermined image in the remaining areas excluding the area wherein the at least one third block displays the content.

The control method according to an embodiment of the disclosure may further include the step of controlling the reflectance of each of the plurality of blocks in block units, and each of the plurality of blocks may have the same size.

Various embodiments of the disclosure can be applied not only to a display device, but also to various types of electronic devices including a mirror function and a display function.

The aforementioned embodiments may be implemented in a recording medium that can be read by a computer or a device similar to a computer, by using software, hardware, or a combination thereof. In some cases, the embodiments described in this specification may be implemented as a processor itself. According to implementation by software, the embodiments such as procedures and functions described in this specification may be implemented as separate software modules. Each of the software modules can perform one or more functions and operations described in this specification.

Computer instructions for performing processing operations of the display device 100 according to the aforementioned various embodiments of the disclosure may be stored in a non-transitory computer-readable medium. Computer instructions stored in such a non-transitory computer-readable medium may make the processing operations at the display device 100 according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and a memory. As specific examples of a non-transitory computer-readable medium, there may be a CD, a DVD, a hard disc, a blue-ray disc, a USB, a memory card, a ROM, and the like.

The above-described embodiments are merely specific examples to describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments, disclosed herein

## Claims

1. A display device comprising:
a mirror display comprising a plurality of blocks;
a camera; and
at least one processor configured to control at least one of a reflectance and display of the plurality of blocks,
wherein the at least one processor is configured to:
control first blocks among the plurality of blocks to display a content,
control second blocks among the plurality of blocks to have a first reflectance providing at least a part of a mirror image on a front side of the mirror display,
identify a second part of the mirror image corresponding to the first blocks based on an image captured by the camera, and
control the first blocks to display the second part of the mirror image and the content by overlapping the content with the second part of the mirror image.

2. The display device of claim 1,
wherein the at least one processor is further configured to: control at least one third block, among the first blocks, which include a boundary of the content to display the second part of the mirror image in an area excluding an area in which the at least one third block displays the content.

3. The display device of claim 2,
wherein the at least one processor is further configured to:
control the at least one third block to have a second reflectance, and
control the first blocks excluding the at least one third block to have a third reflectance, and
wherein the first blocks excluding the at least one third block do not include the boundary of the content.

4. The display device of claim 3,
wherein the first reflectance is a maximum reflectance,
wherein the third reflectance is a minimum reflectance, and
wherein the second reflectance is a reflectance between the maximum reflectance and the minimum reflectance.

5. The display device of claim 3, further comprising a sensor configured to sense an amount of external light,
wherein the at least one processor is further configured to:
based on the amount of sensed external light being less than a threshold value, increase the second reflectance based on the first reflectance, and
based on the amount of sensed external light being greater than or equal to the threshold value, decrease the second reflectance based on the third reflectance.

6. The display device of claim 1,
wherein the at least one processor is further configured to:
control at least one third block, among the first blocks, to combine the content displayed by the at least one third block and the second part of the mirror image.

7. The display device of claim 1,
wherein the at least one processor is further configured to:
adjust a size of the content displayed on the first blocks such that a boundary of the content corresponds to boundaries among the plurality of blocks.

8. The display device of claim 7,
wherein the at least one processor is further configured to:
provide a visual effect based on adjusting the size of the content during a predetermined frame such that the boundary of the content corresponds with a boundary between the at least one third block and a block adjacent to the at least one third block.

9. The display device of claim 1,
wherein the at least one processor is further configured to:
control at least one third block, among the first blocks, to display a predetermined image in an area excluding an area in which the at least one third block displays the content.

10. The display device of claim 1,
wherein the at least one processor is further configured to:
control a reflectance of the plurality of blocks in block units, and
wherein the plurality of blocks have a same size.

11. A control method of a display device comprising a mirror display including a plurality of blocks, the method comprising:
controlling first blocks among the plurality of blocks to display a content;
controlling second blocks among the plurality of blocks to have a first reflectance providing at least a part of a mirror image on a front side of the mirror display; and
identifying a second part of the mirror image corresponding to the first blocks based on an image captured by a camera,
wherein controlling the first blocks comprises:
controlling the first blocks to display the second part of the mirror image and the content by overlapping the content to the second part of the mirror image.

12. The control method of claim 11,
wherein the controlling the first blocks comprises:
controlling at least one third block, among the first blocks, which includes a boundary of the content to display the second part of the mirror image in an area excluding an area in which the at least one third block displays the content.

13. The control method of claim 12,
wherein the control method further comprises:
controlling a reflectance of the plurality of blocks,
wherein the controlling the reflectance comprises:
controlling the at least one third block among the first blocks to have a second reflectance; and
controlling the first blocks excluding the at least one third block to have a third reflectance, and
wherein the first blocks excluding the at least one third block do not include the boundary of the content.

14. The control method of claim 13,
wherein the first reflectance is a maximum reflectance,
wherein the third reflectance is a minimum reflectance, and
wherein the second reflectance is a reflectance between the maximum reflectance and the minimum reflectance.

15. The control method of claim 13,
wherein the control method further comprises:
sensing an amount of external light, and
wherein the controlling the reflectance comprises:
based on the amount of sensed external light being less than a threshold value, increasing the second reflectance based on the first reflectance; and
based on the amount of sensed external light being greater than or equal to the threshold value, decreasing the second reflectance based on the third reflectance.
